# EUROPEAN PATENT SPECIFICATION

(11) **EP 4 317 746 B1**
(45) Date of publication and mention of the grant of the patent: **21.10.2026**
(21) Application number: 22780958.9
(22) Date of filing: 29.03.2022
(51) Int. Cl.: F16H 25/22, F16H 25/24

(54) **BALL SCREW DEVICE**
KUGELGEWINDETRIEB
DISPOSITIF DE VIS À BILLES

(30) Priority: 30.03.2021 JP 2021057340
(43) Date of publication of application: 07.02.2024
(73) Proprietor: NSK Ltd., Tokyo 141-8560 (JP)
(72) Inventor: ABE, Daisuke, Fujisawa-shi, Kanagawa 252-0811 (JP); TAKAHASHI, Daijyu, Fujisawa-shi, Kanagawa 252-0811 (JP)
(74) Representative: SSM Sandmair
(86) International application number: PCT/JP2022/015605
(87) International publication number: WO 2022/210747

(56) References cited:
- JP-A- 2003 049 920
- JP-A- 2004 306 728
- JP-A- 2019 015 318
- JP-A- 2019 015 318
- JP-A- H1 111 334
- JP-B2- 3 381 735
- JP-B2- 3 381 735

## Description

### Field

The present disclosure relates to a ball screw device.

### Background

A ball screw device includes a screw shaft, a nut penetrating the screw shaft, and a plurality of balls arranged between the screw shaft and the nut. The ball screw device converts rotational motion into linear motion in a case of being used in an injection molding machine, a pressing machine, or the like. The nut includes a nut main body which has a cylindrical shape and in an inner peripheral surface of which an inner peripheral raceway surface on which the balls roll is provided, and an attachment portion placed at an end of the nut main body and to which another component is attached.

When the ball screw device is driven, a load is input to the attachment portion, and a stress in an axial direction acts on the nut main body. Specifically, a large stress acts on a portion of the nut main body which portion is close to the attachment portion. Thus, the portion of the nut main body which portion is close to the attachment portion elastically deforms (expands and contracts) greatly in the axial direction. In addition, with the elastic deformation of the nut main body, a portion of the inner peripheral raceway surface which portion is close to the attachment portion is greatly displaced in the axial direction. As a result, a ball that rolls near the attachment portion receives a larger load from the inner peripheral raceway surface than a ball that rolls far from the attachment portion. Thus, load distribution of the balls varies in the axial direction.

On the other hand, an inner peripheral raceway surface of a nut of Patent Literature 1 has a pitch diameter that becomes larger as becoming closer to an attachment portion. In other words, a gap between a ball and the inner peripheral raceway surface in an axial direction becomes larger as becoming closer to the attachment portion. Thus, even when the nut is elastically deformed by a stress, a load that acts on a ball rolling near the attachment portion is controlled not to be large.

### Citation List

### Patent Literature

Patent Literature 1: Japanese Patent No. 3381735

### Summary

JP 2019 015318 A provides a ball screw in which the flange portion of a nut is fixed in contact with a member having a large mass such as a platen, and the load distribution of balls within the nut is unlikely to deteriorate even when operated at high speed.
JP H11 11334 A relates to an electric power steering device mounted on a vehicle to suppress noise in a vehicle cabin generated due to operation of a rack shaft. This document discloses the preamble of claim 1.

### Technical Problem

However, in a ball screw device of Patent Literature 1, expansion and contraction of a screw shaft is not considered. In addition, there is a limitation that the number of a ball circuit is one, and application to a case where there is a plurality of ball circuits is not possible. Thus, it is desired to develop a ball screw device that has a plurality of ball circuits and can control a variation in load distribution for each ball circuit.

The present disclosure has been made in view of the above, and an object thereof is to provide a ball screw device capable of controlling a variation in load distribution for each ball circuit.

### Solution to Problem

In order to achieve the above object, a ball screw device according to an embodiment of the present disclosure is defined by independent claim 1.

Further, as a desirable embodiment of the ball screw device according to an embodiment of the present disclosure, a distance between the first attachment portion and the first circuit in the axial direction is shorter than a distance between the second attachment portion and the second circuit in the axial direction, and the first inner peripheral raceway surface has the larger pitch diameter than the second inner peripheral raceway surface.

Since a distance between a second attachment portion and the second circuit is long, an amount of displacement of a portion, which is included in the second circuit, in the outer peripheral raceway surface in the axial direction is small. Thus, a load acting on the balls rolling on the second circuit is smaller (load is smaller) than that on the balls rolling on the first circuit. Then, according to the ball screw device of the present disclosure, the pitch diameter of the first inner peripheral raceway surface is larger than the pitch diameter of the second inner peripheral raceway surface. Thus, the load acting on the balls rolling on the first circuit is more significantly reduced than that on the balls rolling on the second circuit. Thus, the load distribution for each ball circuit becomes uniform.

Further, as a desirable embodiment of the ball screw device according to an embodiment of the present disclosure, pitch diameters of threads of the first inner peripheral raceway surface become larger as becoming closer to the first direction.

Accordingly, the load distribution of the balls of the first circuit becomes uniform in the axial direction.

Further, as a desirable embodiment of the ball screw device according to an embodiment of the present disclosure, pitch diameters of threads of the second inner peripheral raceway surface become larger as becoming closer to the second direction.

Accordingly, the load distribution of the balls of the second circuit becomes uniform in the axial direction.

Further, as a desirable embodiment of the ball screw device according to an embodiment of the present disclosure, pitch diameters of threads of the central inner peripheral raceway surface become larger as becoming away in the axial direction from a central portion in the axial direction of the nut main body.

Accordingly, the load distribution of the balls of the central circuit becomes uniform in the axial direction.
The invention is set out by the appended set of claims. The embodiments and/or examples of the following description, which are not covered by the claims, are provided for illustrative purpose only and are only intended to assist the reader in understanding the present invention. However, such embodiments and/or examples which are not covered by the claims do not form part of the present invention that is solely defined by the claims.

### Advantageous Effects of Invention

According to the present disclosure, a variation in a load distribution for each ball circuit can be eliminated, and a life of the ball screw device can be extended.

### Brief Description of Drawings

FIG. 1 is an overall view illustrating an entire ball screw device according to a first embodiment.
FIG. 2 is a cross-sectional view of a nut of the first embodiment which view is taken along an axial direction.
FIG. 3 is a view illustrating a load distribution of balls during driving of a ball screw device of a first comparative example.
FIG. 4 is a view illustrating a load distribution of balls during driving of the ball screw device of the first embodiment.
FIG. 5 is an overall view illustrating an entire ball screw device according to a second embodiment.
FIG. 6 is a cross-sectional view of a nut of the second embodiment which view is taken along an axial direction.
FIG. 7 is an overall view illustrating an entire ball screw device according to a third embodiment.
FIG. 8 is a cross-sectional view of a nut of the third embodiment which view is taken along an axial direction.
FIG. 9 is a view illustrating a load distribution of balls during driving of a ball screw device of a second comparative example.
FIG. 10 is a view illustrating a load distribution of balls during driving of a ball screw device of a third comparative example.
FIG. 11 is a view illustrating a load distribution of balls during driving of the ball screw device of the third embodiment.
FIG. 12 is a cross-sectional view of a nut of a fourth embodiment which view is taken along an axial direction.
FIG. 13 is a view illustrating a load distribution of balls during driving of a ball screw device of a fourth comparative example.
FIG. 14 is a view illustrating a load distribution of balls during driving of a ball screw device of the fourth embodiment.

### Description of Embodiments

A mode to carry out an invention will be described in detail with reference to the drawings. The present disclosure is not limited by contents described in the following description. In addition, components described in the following include what can be easily assumed by those skilled in the art and what is substantially the same. Furthermore, the components described in the following can be arbitrarily combined.

### (First embodiment)

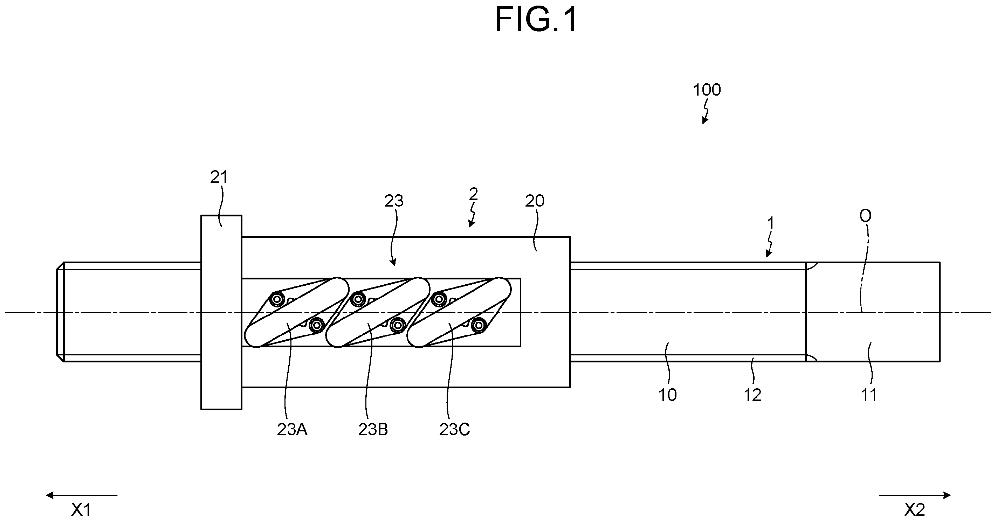

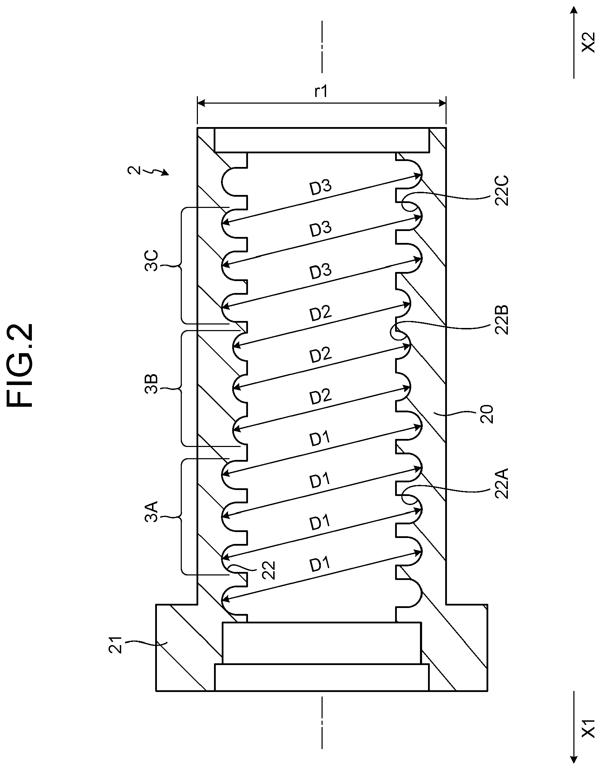

FIG. 1 is an overall view illustrating an entire ball screw device according to the first embodiment. FIG. 2 is a cross-sectional view of a nut of the first embodiment which view is taken along an axial direction. As illustrated in FIG. 1, a ball screw device 100 of the first embodiment includes a screw shaft 1, a nut 2, and a plurality of balls (not illustrated).

The screw shaft 1 is a rod-like component with a central axis O as a center. Hereinafter, a direction parallel to the central axis O is referred to as an axial direction. The screw shaft 1 includes a screw shaft main body 10 and a second attachment portion 11. An outer peripheral raceway surface 12 is provided on an outer peripheral surface of the screw shaft main body 10. A groove shape of the outer peripheral raceway surface 12 is gothic arc (not specifically illustrated). Threads of the outer peripheral raceway surface 12 have the same lead. The threads of the outer peripheral raceway surface 12 have the same pitch diameter. The second attachment portion 11 is provided at an end of the screw shaft main body 10. The second attachment portion 11 is attached to an attachment object such as an injection molding machine or a pressing machine in which the ball screw device 100 is used.

The nut 2 includes a nut main body 20 and a first attachment portion 21. As illustrated in FIG. 2, the nut main body 20 has a cylindrical shape. An outer diameter (diameter) of the nut main body 20 is r1. An inner peripheral raceway surface 22 is provided on an inner peripheral surface of the nut main body 20. A groove shape of the inner peripheral raceway surface 22 is gothic arch. Threads of the inner peripheral raceway surface 22 have the same lead as those of the outer peripheral raceway surface 12. Thus, a spiral track is formed between the outer peripheral raceway surface 12 and the inner peripheral raceway surface 22.

Although not specifically illustrated, the balls are steel balls. The balls have the same diameter and are arranged on a raceway. When the ball screw device is driven, the balls roll on the outer peripheral raceway surface 12 and the inner peripheral raceway surface 22. Furthermore, in the present embodiment, the balls have a gap in the axial direction with respect to the outer peripheral raceway surface 12 and the inner peripheral raceway surface 22. That is, the balls are assembled in a state in which a pre-load is not applied.

As illustrated in FIG. 1, the first attachment portion 21 is a flange protruding outward in a radial direction from an outer peripheral surface of the nut main body 20. An object that moves in the axial direction is attached to the first attachment portion 21 in, for example, the injection molding machine, the pressing machine, or the like. The first attachment portion 21 is placed at an end in the axial direction of the nut main body 20. Hereinafter, in the axial direction, a direction in which the first attachment portion 21 is arranged as viewed from a central portion in the axial direction of the nut main body 20 is referred to as a first direction X1. In addition, in the axial direction, a direction opposite to the first direction X1 is referred to as a second direction X2. Furthermore, in the screw shaft 1, the second attachment portion 11 is arranged in the second direction X2 with respect to the screw shaft main body 10.

The nut 2 includes a plurality of circulation components 23. The circulation components 23 are tubes. In the circulation components 23 of the present embodiment, the balls are circulated with three threads of the raceway being one ball circuit. Furthermore, the raceway has a plurality of the ball circuits respectively corresponding to the circulation components 23. In the present embodiment, the nut 2 includes the three circulation components 23. Thus, the number of ball circuits of the present embodiment is three (see reference signs 3A, 3B, and 3C of FIG. 2).

Hereinafter, among the three circulation components 23, what is arranged in the first direction the most is referred to as a first circulation component 23A. Furthermore, the remaining two circulation components are referred to as a central circulation component 23B and a second circulation component 23C in order of arrangement from the first circulation component 23A in the second direction X2. In addition, the ball circuit circulated by the first circulation component 23A is referred to as a first circuit 3A. The ball circuit circulated by the central circulation component 23B is referred to as a central circuit 3B. The ball circuit circulated by the second circulation component 23C is referred to as a second circuit 3C.

As illustrated in FIG. 2, the inner peripheral raceway surface 22 includes a first inner peripheral raceway surface 22A that belongs to the first circuit 3A, a central inner peripheral raceway surface 22B that belongs to the central circuit 3B, and a second inner peripheral raceway surface 22C that belongs to the second circuit 3C. Pitch diameters of the first inner peripheral raceway surface 22A and the second inner peripheral raceway surface 22C are different from a pitch diameter of the central inner peripheral raceway surface 22B. Specifically, each thread of the first inner peripheral raceway surface 22A has a pitch diameter D1. Each thread of the central inner peripheral raceway surface 22B has a pitch diameter D2. Each thread of the second inner peripheral raceway surface 22C has a pitch diameter D3. The first inner peripheral raceway surface 22A and the second inner peripheral raceway surface 22C have the larger pitch diameters than the central inner peripheral raceway surface 22B (D1, and D3 > D2). Thus, a gap between the balls and the raceway surface (outer peripheral raceway surface 12 and inner peripheral raceway surface 22) in the axial direction and the radial direction is larger in the first circuit 3A and the second circuit 3C than in the central circuit 3B. Note that an inner diameter (diameter) of the nut 2 is the same from an end in the first direction X1 to an end in the second direction X2. That is, a screw thread of the first inner peripheral raceway surface 22A, a screw thread of the central inner peripheral raceway surface 22B, and a screw thread of the second inner peripheral raceway surface 22C have the same height.

Next, an effect of the ball screw device of the first embodiment will be described. In the description of the effect, a ball screw device of a first comparative example will be described as a comparative object. The ball screw device of the first comparative example is different from that of the first embodiment in a point that pitch diameters of a first inner peripheral raceway surface 22A, a central inner peripheral raceway surface 22B, and a second inner peripheral raceway surface 22C are the same, and other configurations are the same.

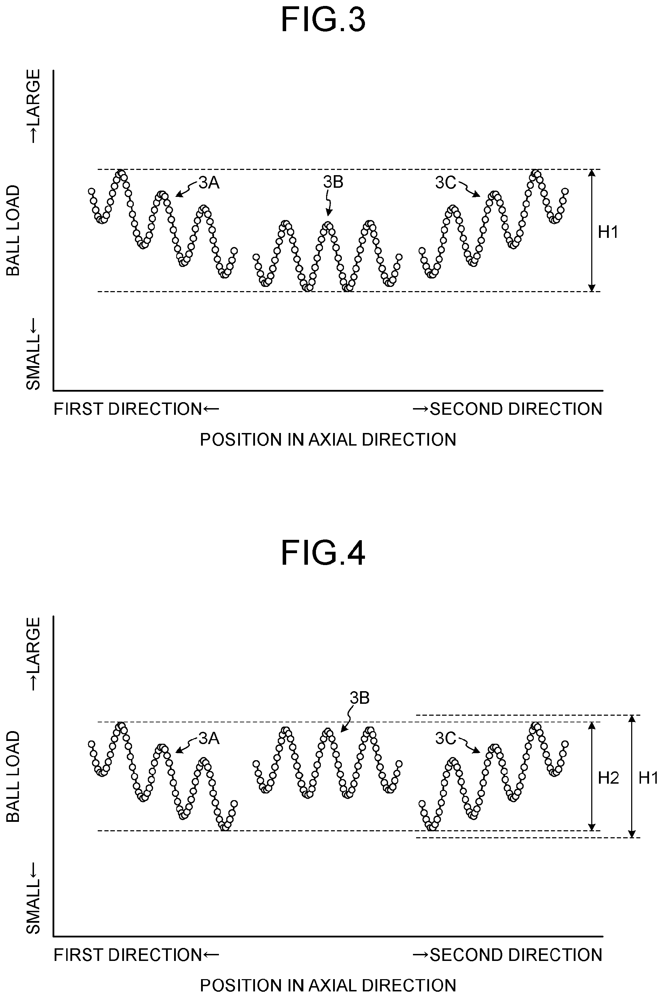

FIG. 3 is a load distribution of balls during driving of the ball screw device of the first comparative example. FIG. 4 is a view illustrating a load distribution of balls during driving of the ball screw device of the first embodiment. That is, FIG. 3 and FIG. 4 are views illustrating magnitude of an acting load in a manner corresponding to positions of the balls in the axial direction. In FIG. 3 and FIG. 4, plotted points (see white circles) are connected and graphed. In addition, what is graphed has a waveform shape. In other words, in the load acting on the balls, the acting load increases or decreases in cycles in response to displacement of the balls in the axial direction. In addition to an axial load, a load in a radial direction acts on the ball screw device, and the ball screw device is bent. Then, in a cross-sectional view of the ball screw device, magnitude of a stress is generated in each part in a circumferential direction, and the load acting on the balls at a position in the circumferential direction increases or decreases. That is, in a line graph, one cycle of the waveform indicates that the balls make one round in the circumferential direction. Note that since the number of threads of each ball circuit is three, the number of increase/decrease cycles is three as illustrated in FIG. 3 and FIG. 4. Furthermore, as illustrated in FIG. 3 and FIG. 4, a waveform graph is divided into three in a horizontal axis direction in such a manner as to correspond to each ball circuit. How the load in the axial direction on the balls changes in each cycle will be described below with reference to FIG. 3 and FIG. 4.

As illustrated in FIG. 3, with respect to the first comparative example, the load acting on the balls does not change significantly in a central circuit 3B even when a cycle of the waveform changes. On the other hand, in a first circuit 3A, the load on the balls increases as the cycle changes in a first direction X1. Similarly, also in a second circuit 3C, the load on the balls increases as the cycle changes in a second direction X2. Thus, as a whole, as the cycle changes from a central portion in an axial direction of an inner peripheral raceway surface 22 toward the first direction X1 and the second direction X2, the load acting on the balls increases. Thus, the balls rolling on the first circuit 3A and the second circuit 3C receive the larger load than the balls rolling on the central circuit. In addition, in the first comparative example, the central circuit 3B includes a cycle of a case where the load acting on the balls is the smallest. Each of the first circuit 3A and the second circuit 3C includes a cycle of a case where the load acting on the balls is the largest. In the first comparative example, a distribution width of the load acting on the balls is H1.

On the other hand, as illustrated in FIG. 4, in the central circuit 3B of the first embodiment, the load acting on the balls does not change significantly even when the cycle of the waveform changes, as in the first comparative example. Furthermore, similarly to the first comparative example, the load on the balls increases as the cycle changes in the first direction X1 in the first circuit 3A. Similarly to the first comparative example, the load on the balls increases in the second circuit 3C as the cycle changes in the second direction X2. Thus, the shapes of the waveforms of the ball circuits (3A, 3B, and 3C) in the first comparative example are substantially the same as those of the ball circuits (3A, 3B, and 3C) in the first embodiment.

On the other hand, in the first circuit 3A and the second circuit 3C of the first embodiment, since the pitch diameters of the first inner peripheral raceway surface 22A and the second inner peripheral raceway surface 22C are large (gap in the axial direction is large), the maximum load is reduced as compared with the first comparative example. In other words, the waveforms of the first circuit 3A and the second circuit 3C in FIG. 4 move downward from the waveforms of the first circuit 3A and the second circuit 3C in FIG. 3. Thus, in the balls rolling on the first circuit 3A and the second circuit 3C, the increase in the load due to the rolling surface displacement is controlled to be low. On the other hand, the waveform of the central circuit 3B of the first embodiment moves upward from the waveform of the central circuit 3B of FIG. 3, and the load on the balls rolling on the central circuit 3B increases. This is because the load on the balls rolling on the first circuit 3A and the second circuit 3C is reduced, and the load on the balls rolling on the central circuit 3B is relatively increased. From the above, a distribution width H2 of the load acting on the balls in the ball screw device 100 of the first embodiment is smaller than the distribution width H1 of the first comparative example. Thus, according to the first embodiment, the loads on the balls respectively rolling on the first circuit, the central circuit, and the second circuit are equalized.

According to the ball screw device 100 described above, wear of only some of the plurality of balls (balls of the first circuit 3A and the second circuit 3C) earlier than a predetermined period is avoided, and a life of the ball screw device becomes longer.

As described above, the ball screw device 100 of the first embodiment includes the screw shaft 1, the nut 2, and the plurality of balls. One end of the screw shaft 1 points in the first direction X1, the other end thereof points in the second direction X2, and the outer peripheral raceway surface 12 is provided on the outer peripheral surface. The nut 2 is provided with the inner peripheral raceway surface 22 on the inner peripheral surface, and penetrates the screw shaft 1. The plurality of balls is arranged on the raceway between the outer peripheral raceway surface 12 and the inner peripheral raceway surface 22. The nut 2 has the at least three or more circulation components 23. The raceway has the at least three or more ball circuits respectively corresponding to the circulation components 23. The at least three or more ball circuits include the central circuit 3B placed at the central portion of the nut 2 in the axial direction parallel to the central axis O of the screw shaft 1, the first circuit 3A placed in the first direction X1 with respect to the central circuit 3B, and the second circuit 3C placed in the second direction X2 with respect to the central circuit 3B. In the outer peripheral raceway surface 12, the pitch diameters of the threads are the same. In the inner peripheral raceway surface 22, the first inner peripheral raceway surface 22A that belongs to the first circuit 3A and the second inner peripheral raceway surface 22C that belongs to the second circuit 3C have different pitch diameters from the central inner peripheral raceway surface 22B that belongs to the central circuit 3B.

By appropriately setting the pitch diameters of the first inner peripheral raceway surface 22A and the second inner peripheral raceway surface 22C, it is possible to equalize the load distribution for each ball circuit.

In addition, in the ball screw device of the first embodiment, the nut 2 includes the nut main body 20 which has the cylindrical shape and in which the inner peripheral raceway surface 22 is provided, and the first attachment portion 21 provided at the end in the first direction X1 of the nut main body 20. The screw shaft 1 includes the screw shaft main body 10 which has a shaft-like shape and in which the outer peripheral raceway surface 12 is provided, and the second attachment portion 11 provided at the end in the second direction X2 of the screw shaft main body 10. The first inner peripheral raceway surface 22A and the second inner peripheral raceway surface 22C have the larger pitch diameters than the central inner peripheral raceway surface 22B.

According to the above-described configuration, an increase in the loads acting on the balls rolling on the first circuit 3A and the second circuit 3C is controlled, and the load distribution for each ball circuit becomes uniform.

Although the first embodiment has been described above, the present disclosure is not limited to what has three ball circuits (circulation components 23). Hereinafter, other embodiments in which the number of ball circuits is increased will be described.

### (Second embodiment)

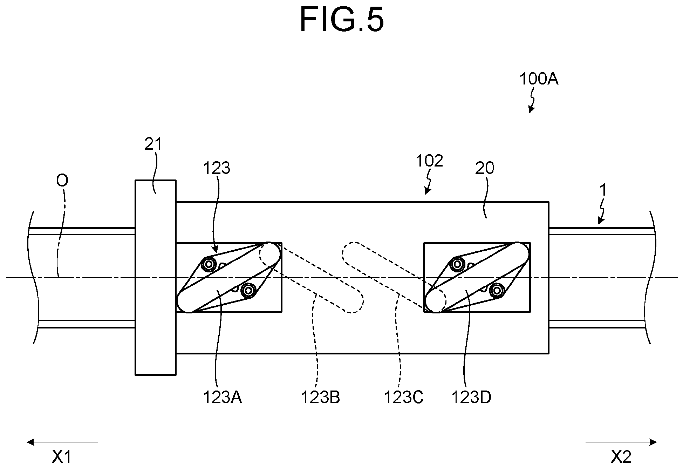

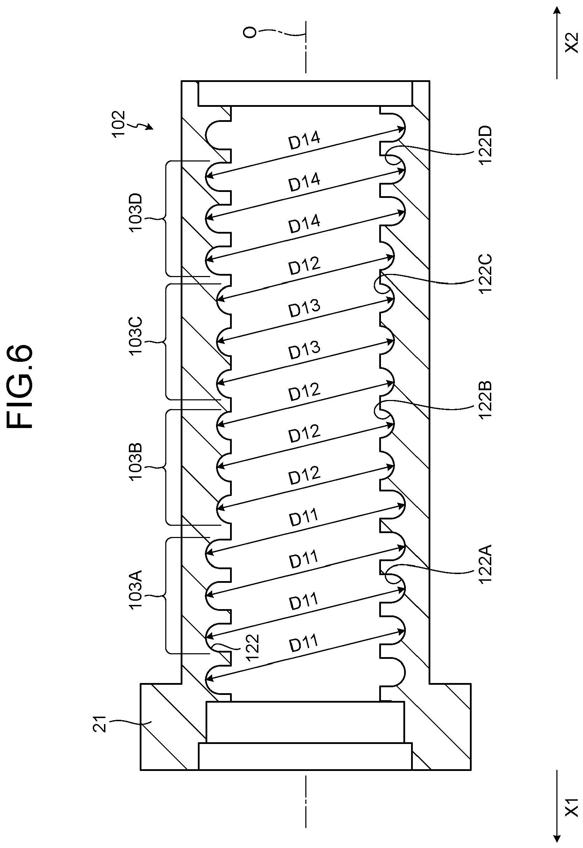

FIG. 5 is an overall view illustrating an entire ball screw device according to the second embodiment. FIG. 6 is a cross-sectional view of a nut of the second embodiment which view is taken along an axial direction. A ball screw device 100A of the second embodiment is different from the ball screw device 100 of the first embodiment in a point that a nut 102 includes four circulation components 123.

Hereinafter, among the four circulation components 123, the component arranged in a first direction X1 the most is referred to as a first circulation component 123A. The remaining three circulation components 123 are referred to as a central first circulation component 123B, a central second circulation component 123C, and a second circulation component 123D in order of arrangement in a second direction X2 from the first circulation component 123A. A ball circuit circulated by the first circulation component 123A is referred to as a first circuit 103A, a ball circuit circulated by the central first circulation component 123B is referred to as a central first circuit 103B, a ball circuit circulated by the central second circulation component 123C is referred to as a central second circuit 103C, and a ball circuit circulated by the second circulation component 123D is referred to as a second circuit 103D.

An inner peripheral raceway surface 122 includes a first inner peripheral raceway surface 122A that belongs to the first circuit 103A, a central first inner peripheral raceway surface 122B that belongs to the central first circuit 103B, a central second inner peripheral raceway surface 122C that belongs to the central second circuit 103C, and a second inner peripheral raceway surface 122D that belongs to the second circuit 103D. A pitch diameter D11 of the first inner peripheral raceway surface 122A and a pitch diameter D14 of the second inner peripheral raceway surface 122D are larger than a pitch diameter D12 of the central first inner peripheral raceway surface 122B and a pitch diameter D13 of the central second inner peripheral raceway surface 122C. Also in such a ball screw device 100A, loads on balls rolling on the first circuit 103A and the central second circuit 103C are reduced, and load distribution for each ball circuit becomes uniform.

Furthermore, as illustrated in FIG. 5, with respect to positions in a circumferential direction of the circulation components 123 with respect to the nut 102, the first circulation component 123A and the second circulation component 123D are arranged in the same direction as viewed from a central axis O. Furthermore, the central first circulation component 123B and the central second circulation component 123C are arranged in the same direction as viewed from the central axis O. Then, the first circulation component 123A and the second circulation component 123D are placed in an opposite direction of the central first circulation component 123B and the central second circulation component 123C as viewed from the central axis O. Since the balls enter the inside of the circulation components 123, a load applied to other balls rolling in the same direction as the circulation components 123 as viewed from the central axis O increases while the balls are circulating in the circulation components 123. If the circulation components 123 are arrayed in the axial direction, a large load concentrates on the balls when the balls roll in the same direction as the circulation components as viewed from the central axis. Thus, the concentration of the load is avoided by shifting of the positions of the circulation components 123 in the circumferential direction.

### (Third embodiment)

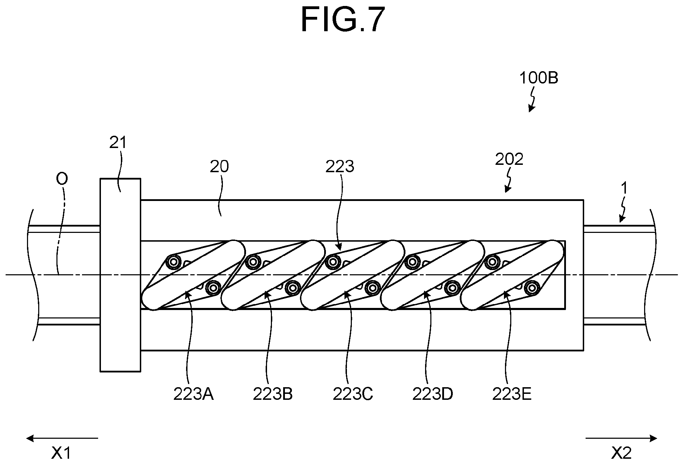

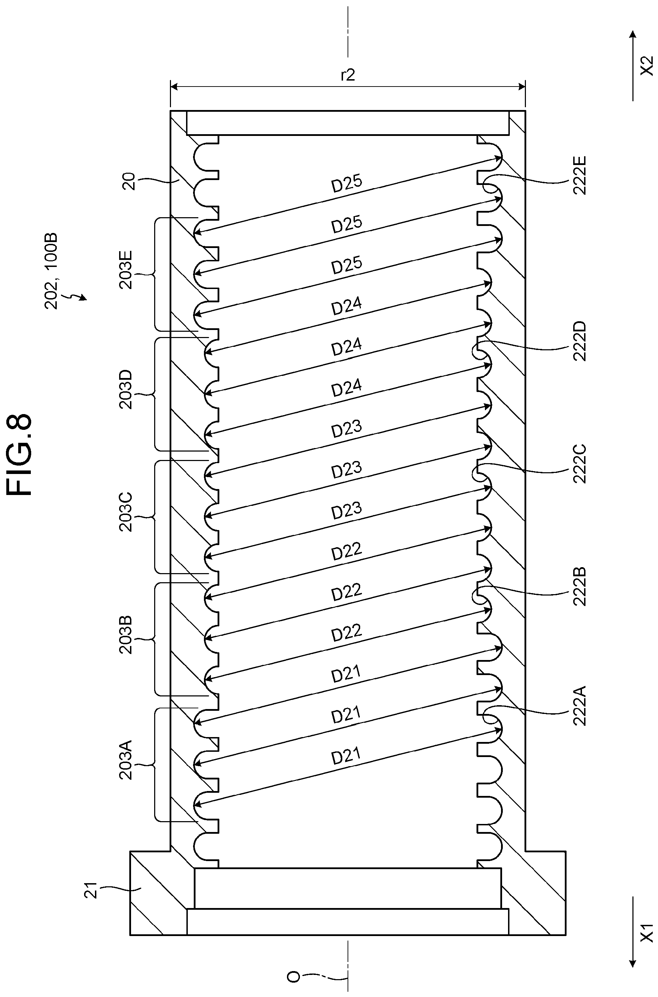

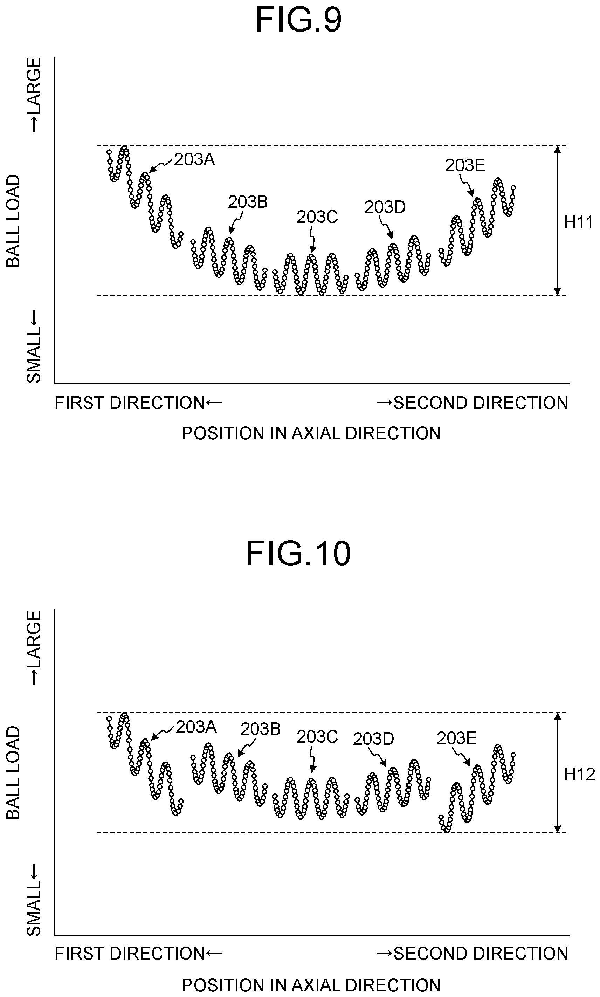

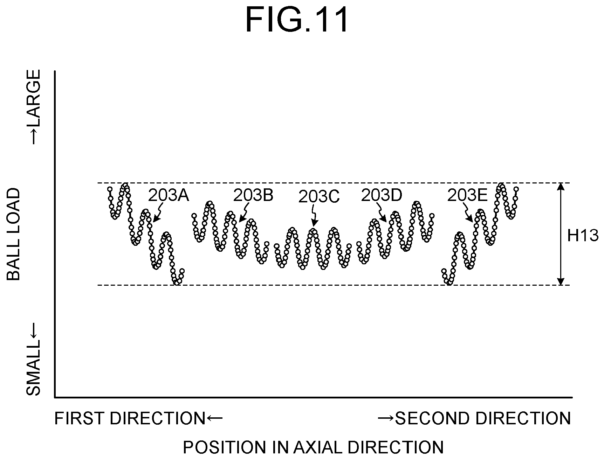

FIG. 7 is an overall view illustrating an entire ball screw device according to the third embodiment. FIG. 8 is a cross-sectional view of a nut of the third embodiment which view is taken along an axial direction. FIG. 9 is a view illustrating a load distribution of balls during driving of a ball screw device of a second comparative example. FIG. 10 is a view illustrating a load distribution of balls during driving of a ball screw device of a third comparative example. FIG. 11 is a view illustrating a load distribution of balls during driving of a ball screw device of a third embodiment.

A ball screw device 100B of the third embodiment is different from the ball screw device 100 of the first embodiment in a point that a nut 202 includes five circulation components 223. Hereinafter, among the five circulation components 223, the component arranged in a first direction X1 the most is referred to as a first circulation component 223A. The remaining four circulation components 223 are referred to as a central first circulation component 223B, a central second circulation component 223C, a central third circulation component 223D, and a second circulation component 223E in order of arrangement in a second direction X2 from the first circulation component 223A. In addition, a ball circuit circulated by the first circulation component 223A is referred to as a first circuit 203A. A ball circuit circulated by the central first circulation component 223B is referred to as a central first circuit 203B. A ball circuit circulated by the central second circulation component 223C is referred to as a central second circuit 203C. A ball circuit circulated by the central third circulation component 223D is referred to as a central third circuit 203D. A ball circuit circulated by the second circulation component 223E is referred to as a second circuit 203E. Furthermore, in the ball screw device 100B of the third embodiment, a distance between a first attachment portion 21 and the first circuit 203A in the axial direction is shorter than a distance between a second attachment portion 11 and the second circuit 203E in the axial direction.

An inner peripheral raceway surface 222 includes a first inner peripheral raceway surface 222A that belongs to the first circuit 203A, a central first inner peripheral raceway surface 222B that belongs to the central first circuit 203B, a central second inner peripheral raceway surface 222C that belongs to the central second circuit 203C, a central third inner peripheral raceway surface 222D that belongs to the central third circuit 203D, and a second inner peripheral raceway surface 222E that belongs to the second circuit 203E. The first inner peripheral raceway surface 222A has a pitch diameter larger than that of the second inner peripheral raceway surface 222E (D21 > D25). In addition, the second inner peripheral raceway surface 222E has a pitch diameter larger than that of the central second inner peripheral raceway surface 222C (D25 > D23). Furthermore, the central first inner peripheral raceway surface 222B, the central second inner peripheral raceway surface 222C, and the central third inner peripheral raceway surface 222D have the same pitch diameter (D22 = D23 = D24). From the above, the pitch diameters of the inner peripheral raceway surfaces 222 have a relationship of D21 > D25 > D22 = D23 = D24.
Furthermore, a thickness of a nut main body 220 in a radial direction is thicker than that of the nut 2 of the first embodiment, and a diameter r2 of the nut main body 220 is larger than a diameter r1 of the nut 2 of the first embodiment. Thus, rigidity of the nut main body 220 is improved.

Next, an effect of the ball screw device of the third embodiment will be described. In the description of the effect, the ball screw devices of the second comparative example and the third comparative example will be described as comparative objects. The ball screw device of the second comparative example is different from the ball screw device 100B of the third embodiment in a point that pitch diameters of inner peripheral raceway surfaces 222 are all uniform (all are D23) and a diameter of the nut main body 220 is r1. The ball screw device of the third comparative example is different from the ball screw device 100B of the third embodiment in a point that a diameter of a nut main body 220 is r1.

As illustrated in FIG. 9, in the ball screw device of the second comparative example, a central second circuit 203C placed at a central portion in an axial direction includes a cycle of a case where a load acting on balls is the smallest. As cycles change in a first direction X1 with a waveform of the central second circuit 203C being a reference, the load on the balls increases (see waveforms of a central first circuit 203B and a first circuit 203A). In addition, as the cycles change in a second direction with the waveform of the central second circuit 203C being the reference, the load on the balls increases (see waveforms of a central third circuit 203D and a second circuit 203E). In addition, a rate of increase in the load of a case where the cycles of the waveforms changes in the first direction X1 with a waveform of a second thread of the central second circuit 203C being a start point is higher than that of a case of a change in the second direction X2. That is, the first circuit 203A includes a cycle of a case where the load acting on the balls is the largest.

Note that as in the second comparative example, the first circuit 203A of the plurality of ball circuits has a larger load than the second circuit 203E since a distance between a first attachment portion 21 of a screw shaft 1 and a nut 202 is long and a displacement amount in the axial direction of a portion of an outer peripheral raceway surface 12 which portion faces the central third circuit 203D and the second circuit 203E is small.

As illustrated in FIG. 10, in the ball screw device of the third comparative example, since pitch diameters of a first inner peripheral raceway surface 222A and a second inner peripheral raceway surface 222E are large, loads on balls rolling on a first circuit 203A and a second circuit 203E are reduced, and loads on a central first circuit 203B, a central second circuit 203C, and a central third circuit 203D are relatively increased. Note that the first inner peripheral raceway surface 222A has a larger pitch diameter than the second inner peripheral raceway surface 222E. Thus, the load on the balls rolling on the first circuit 203A is more significantly reduced than that on the balls rolling on the second circuit 203E. From the above, in the third comparative example, an acting load does not concentrate on the balls rolling on the first circuit 203A and the second circuit 203E. Thus, a distribution width H12 of the load acting on the balls of the third comparative example is smaller than a distribution width H11 of the second comparative example.

As illustrated in FIG. 11, in the ball screw device of the third embodiment, the load on the balls of the first circuit 203A is significantly reduced. This is because the nut main body 220 becomes thick and rigidity of the nut main body 220 is increased. In other words, this is because an amount of elastic change in a stress of the nut main body 20 is reduced. Specifically, a displacement amount of the inner peripheral raceway surface 222 close to the first attachment portion 21 is controlled, and the load on the balls rolling on the first circuit 203A is significantly reduced. Note that the loads on the balls in the central first circuit 203B, the central second circuit 203C, the central third circuit 203D, and a second circuit 205E are slightly increased. Thus, a distribution width H13 of the load on the balls of the third embodiment is smaller than the distribution width H12 of the third comparative example.

From the above, according to the third embodiment, the pitch diameters are set in accordance with characteristics of a ball screw device 102B, and the load distribution of the ball circuits (203A, 203B, 203C, 203D, and 203E) can be equalized.

### (Fourth embodiment)

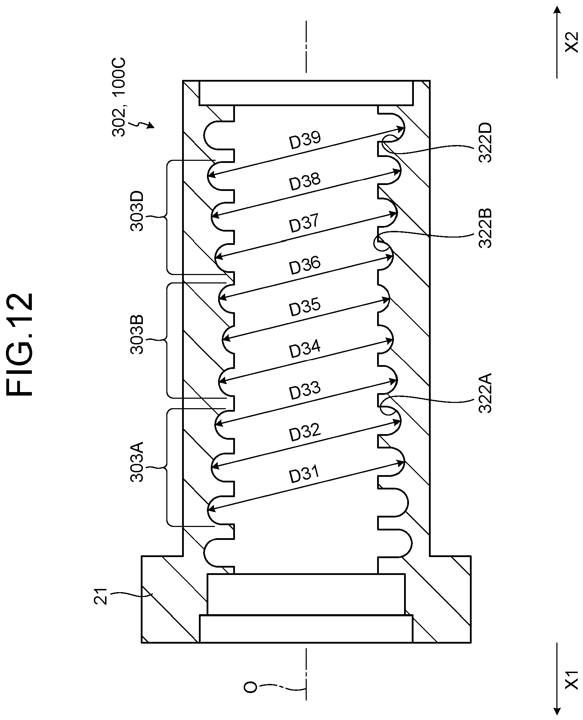

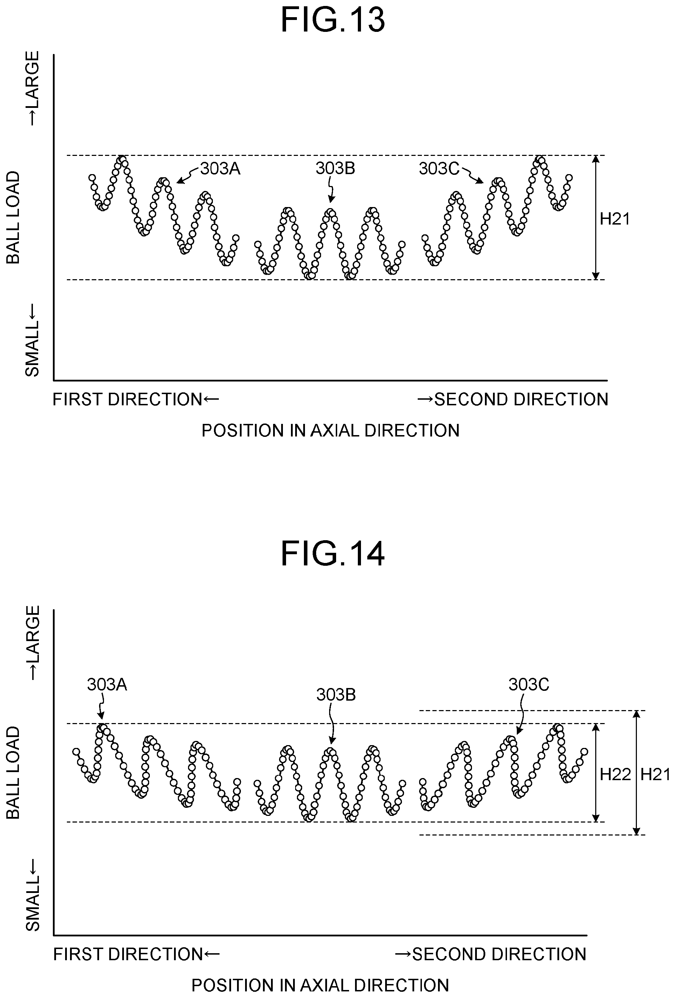

FIG. 12 is a cross-sectional view of a nut of the fourth embodiment which view is taken along an axial direction. FIG. 13 is a view illustrating a load distribution of balls during driving of a ball screw device of a fourth comparative example. FIG. 14 is a view illustrating a load distribution of balls during driving of a ball screw device of the fourth embodiment.

As illustrated in FIG. 12, a ball screw device 100C of the fourth embodiment is different from the ball screw device 100 of the first embodiment of the first embodiment in a point that pitch diameters of threads of an inner peripheral raceway surface increase from a central portion in an axial direction toward a first direction X1 and a second direction (D31 > D32 > D33 > D34 > D35 < D36 < D37 < D38 < D39). Specifically, in threads a first inner peripheral raceway surface 322A, the pitch diameters become larger as places become closer to the first direction X1 (D31 > D32 > D33). In threads of a central inner peripheral raceway surface 322B, the pitch diameters become larger as becoming away from the central portion in the axial direction (D34 and D36 > D35). In threads of a second inner peripheral raceway surface 322C, the pitch diameters become larger as places become closer to the second direction X2 (D39 > D38 > D37).

Next, an effect of the ball screw device of the fourth embodiment will be described. In the description of the effect, the ball screw device of the fourth comparative example will be described as a comparative object. The ball screw device of the fourth comparative example is different from the ball screw device 100C of the fourth embodiment in a point that all pitch diameters of an inner peripheral raceway surface 322 are uniform (all are D35).

As illustrated in FIG. 13, in the fourth comparative example, as cycles change from a central portion in an axial direction of the inner peripheral raceway surface 322 in a first direction X1 and a second direction X2, loads acting on balls become larger. That is, the loads on the balls rolling on a first circuit 303A and a second circuit 303C are high. On the other hand, as illustrated in FIG. 14, in a first circuit 303A of the third embodiment, an increase amount of the load every time the cycle changes in the first direction X1 is smaller than that in the first circuit of the fourth comparative example. In addition, in a second circuit of the third embodiment, an increase amount of the load every time the cycle changes in the second direction is smaller than that in the second circuit of the fourth comparative example. Also in a central circuit, an increase amount of a case where the cycle of the balls changes to the axial direction is slightly reduced. From the above, according to the fourth embodiment, a variation in a load distribution of the ball circuits (303A, 303B, and 303C) can be controlled and a variation in a load distribution of the balls in each of the ball circuits (303A, 303B, and 303C) can be controlled to be small.

Although the first to fourth embodiments have been described above, a ball screw device of the present disclosure is not limited to the examples described in the embodiments. For example, in the embodiments, the first attachment portion 21 is placed at the end in the first direction of the nut main body 20, and the second attachment portion 11 is placed at the end in the second direction of the screw shaft main body 10. However, in the present disclosure, a first attachment portion 21 may be placed at an end in a second direction of a nut main body 20, and a second attachment portion 11 may be placed at an end in a first direction of a screw shaft main body 10. In addition, in a ball screw device of the present disclosure, a first attachment portion of a nut and a second attachment portion of a screw shaft may be arranged in the same direction in an axial direction. That is, the first attachment portion may be placed at an end in a first direction of a nut main body, and the second attachment portion may be placed at an end in the first direction of a screw shaft main body. Alternatively, the first attachment portion may be placed at an end in a second direction of the nut main body, and the second attachment portion may be placed at an end in the second direction of the screw shaft main body. In addition, the present disclosure is to equalize a load distribution for each ball circuit due to a displacement in an axial direction of a rolling surface, and a direction of a load in the axial direction which load acts on a ball screw device is not limited to either a tensile load or a compressive load.

In addition, although one first circuit and one second circuit are provided in each of the embodiments, the first circuit and the second circuit may be divided into a plurality of circuits. That is, the first circuit may include two circuits, and the second circuit may include two circuits. In a case where each of the first circuit and the second circuit includes a plurality of circuits, the number of circuits may not be the same. In addition, although the inner peripheral raceway surface of each of the embodiments is gothic arc, an inner peripheral raceway surface may be circular arc in the present disclosure. In addition to the flange, an attachment portion of the present disclosure may be an attachment portion in which one end in an axial direction of a nut main body 20 has a rectangular outer peripheral surface when viewed from the axial direction, and a shape thereof is not specifically limited. Furthermore, a circulation component may be a top. Note that in the present disclosure, pitch diameters of the inner peripheral raceway surface being different (large) means being different (large) for at least 1.0 µm or more.

### Reference Signs List

100, 100A, 100B, 100C BALL SCREW DEVICE
1 SCREW SHAFT
2, 102, 202 NUT
3A, 103A, 203A, 303A FIRST CIRCUIT
3B CENTRAL CIRCUIT
3C, 103D, 203E, 303C SECOND CIRCUIT
10 SCREW SHAFT MAIN BODY
11 SECOND ATTACHMENT PORTION
12 OUTER PERIPHERAL RACEWAY SURFACE
20, 220 NUT MAIN BODY
21 FIRST ATTACHMENT PORTION
22 INNER PERIPHERAL RACEWAY SURFACE
22A, 122A, 222A, 322A FIRST INNER PERIPHERAL RACEWAY SURFACE
22B CENTRAL INNER PERIPHERAL RACEWAY SURFACE
22C, 122D, 222E, 322C SECOND INNER PERIPHERAL RACEWAY SURFACE
23, 123, 223 CIRCULATION COMPONENT
103B, 203B CENTRAL FIRST CIRCUIT
103C, 203C CENTRAL SECOND CIRCUIT
122B, 222B CENTRAL FIRST INNER PERIPHERAL RACEWAY SURFACE
122C, 222C CENTRAL SECOND INNER PERIPHERAL RACEWAY SURFACE
203D CENTRAL THIRD CIRCUIT
222D CENTRAL THIRD INNER PERIPHERAL RACEWAY SURFACE

plurality of circuits. That is, the first circuit may include two circuits, and the second circuit may include two circuits. In a case where each of the first circuit and the second circuit includes a plurality of circuits, the number of circuits may not be the same. In addition, although the inner peripheral raceway surface of each of the embodiments is gothic arc, an inner peripheral raceway surface may be circular arc in the present disclosure. In addition to the flange, an attachment portion of the present disclosure may be an attachment portion in which one end in an axial direction of a nut main body 20 has a rectangular outer peripheral surface when viewed from the axial direction, and a shape thereof is not specifically limited. Furthermore, a circulation component may be a top. Note that in the present disclosure, pitch diameters of the inner peripheral raceway surface being different (large) means being different (large) for at least 1.0 µm or more.

### Reference Signs List

100, 100A, 100B, 100C BALL SCREW DEVICE
1 SCREW SHAFT
2, 102, 202 NUT
3A, 103A, 203A, 303A FIRST CIRCUIT
3B CENTRAL CIRCUIT
3C, 103D, 203E, 303C SECOND CIRCUIT
10 SCREW SHAFT MAIN BODY
11 SECOND ATTACHMENT PORTION
12 OUTER PERIPHERAL RACEWAY SURFACE
20, 220 NUT MAIN BODY
21 FIRST ATTACHMENT PORTION
22 INNER PERIPHERAL RACEWAY SURFACE
22A, 122A, 222A, 322A FIRST INNER PERIPHERAL RACEWAY SURFACE
22B CENTRAL INNER PERIPHERAL RACEWAY SURFACE
22C, 122D, 222E, 322C SECOND INNER PERIPHERAL RACEWAY SURFACE
23, 123, 223 CIRCULATION COMPONENT
103B, 203B CENTRAL FIRST CIRCUIT
103C, 203C CENTRAL SECOND CIRCUIT
122B, 222B CENTRAL FIRST INNER PERIPHERAL RACEWAY SURFACE
122C, 222C CENTRAL SECOND INNER PERIPHERAL RACEWAY SURFACE
203D CENTRAL THIRD CIRCUIT
222D CENTRAL THIRD INNER PERIPHERAL RACEWAY SURFACE

## Claims

1. A ball screw device (100,100A,100B,100C) comprising:
a screw shaft (1) one end of which points in a first direction, an other end of which points in a second direction, and in which an outer peripheral raceway surface (12) is provided in an outer peripheral surface;
a nut (2,102,202) in which an inner peripheral raceway surface (22) is provided in an inner peripheral surface, and which penetrates the screw shaft (1); and
a plurality of balls arranged in a raceway between the outer peripheral raceway surface (12) and the inner peripheral raceway surface (22), wherein
the nut (2,102,202) has at least three or more circulation components,
the raceway has at least three or more ball circuits respectively corresponding to the circulation components,
the at least three or more ball circuits include
a central circuit (3B) placed in a central portion of the nut (2,102,202) in an axial direction parallel to a central axis of the screw shaft (1),
a first circuit (3A,103A,203A,303A) placed in the first direction with respect to the central circuit (3B), and
a second circuit (3C,103D,203E,303C) placed in the second direction with respect to the central circuit (3B),
pitch diameters of threads in the outer peripheral raceway surface (12) are same,
in the inner peripheral raceway surface (22), a first inner peripheral raceway surface (22A, 122A, 222A, 322A) that belongs to the first circuit (3A,103A,203A,303A) and a second inner peripheral raceway surface (22C, 122D, 222E, 322C) that belongs to the second circuit (3C,103D,203E,303C) have pitch diameters different from that of a central inner peripheral raceway surface (22B) that belongs to the central circuit (3B),
the nut (2,102,202) includes
a nut main body (20,220) which has a cylindrical shape, and in which the inner peripheral raceway surface (22) is provided, and
a first attachment portion (21) provided at an end in the first direction of the nut main body (20,220),
the screw shaft (1) includes
a screw shaft main body (10) which has a shaft-like shape and in which the outer peripheral raceway surface (12) is provided, and
a second attachment portion (11) provided at an end in the second direction of the screw shaft main body (10), and
the first inner peripheral raceway surface (22A, 122A, 222A, 322A) and the second inner peripheral raceway surface (22C, 122D, 222E, 322C) have the larger pitch diameters than the central inner peripheral raceway surface (22B),
**characterized in that**
the first attachment portion (21) is a flange protruding outward in a radial direction from an outer peripheral surface of the nut main body (20, 220).

2. The ball screw device (100B) according to claim 1, wherein
a distance between the first attachment portion (21) and the first circuit (203A) in the axial direction is shorter than a distance between the second attachment portion (11) and the second circuit (203E) in the axial direction, and
the first inner peripheral raceway surface (22A, 122A, 222A, 322A) has the larger pitch diameter than the second inner peripheral raceway surface (22C, 122D, 222E, 322C).

3. The ball screw device (100C) according to claim 1 or claim 2, wherein
pitch diameters of threads of the first inner peripheral raceway surface (22A, 122A, 222A, 322A) become larger as becoming closer to the first direction.

4. The ball screw device (100C) according to any one of claim 1 to claim 3, wherein
pitch diameters of threads of the second inner peripheral raceway surface (22C, 122D, 222E, 322C) become larger as becoming closer to the second direction.

5. The ball screw device (100C) according to any one of claim 1 to claim 4, wherein
pitch diameters of threads of the central inner peripheral raceway surface (22B) become larger as becoming away in the axial direction from a central portion in the axial direction of the nut main body (20,220).

## Patentansprüche

1. Kugelumlaufspindelvorrichtung (100, 100A, 100B, 100C), umfassend:
eine Spindel (1), deren eines Ende in eine erste Richtung und deren anderes Ende in eine zweite Richtung weist und in deren Außenumfangsfläche eine äußere Umfangslaufbahnfläche (12) vorgesehen ist;
eine Mutter (2, 102, 202), in deren Innenumfangsfläche eine innere Umfangslaufbahnfläche (22) vorgesehen ist und die die Spindel (1) durchdringt; und
eine Vielzahl von Kugeln, die in einer Laufbahn zwischen der äußeren Umfangslaufbahnfläche (12) und der inneren Umfangslaufbahnfläche (22) angeordnet sind, wobei
die Mutter (2, 102, 202) mindestens drei oder mehr Umlaufkomponenten aufweist,
die Laufbahn mindestens drei oder mehr Kugelkreisläufe aufweist, die jeweils den Umlaufkomponenten entsprechen,
die mindestens drei oder mehr Kugelkreisläufe
einen zentralen Kreislauf (3B), der in einem zentralen Abschnitt der Mutter (2, 102, 202) in einer axialen Richtung parallel zu einer Mittelachse der Schraubenwelle (1) angeordnet ist,
einen ersten Kreislauf (3A, 103A, 203A, 303A), der in einer ersten Richtung in Bezug auf den zentralen Kreislauf (3B) angeordnet ist, und
einen zweiten Kreislauf (3C, 103D, 203E, 303C), der in Bezug auf den zentralen Kreislauf (3B) in der zweiten Richtung angeordnet ist, umfassen,
die Steigungsdurchmesser der Gewinde in der äußeren Umfangslaufbahnfläche (12) gleich sind,
in der inneren Umfangslaufbahnfläche (22) eine erste innere Umfangslaufbahnfläche (22A, 122A, 222A, 322A), die zum ersten Kreis (3A, 103A, 203A, 303A) gehört, und eine zweite innere Umfangslaufbahnfläche (22C, 122D, 222E, 322C), die zum zweiten Kreis (3C, 103D, 203E, 303C) gehört, Teilkreisdurchmesser aufweisen, die sich von dem einer zentralen inneren Umfangslaufbahnfläche (22B) unterscheiden, die zum zentralen Kreis (3B) gehört,
wobei die Mutter (2, 102, 202)
einen Mutternhauptkörper (20, 220), der eine zylindrische Form aufweist und in dem die innere Umfangslaufbahnfläche (22) vorgesehen ist, sowie
einen ersten Befestigungsabschnitt (21), der an einem Ende des Mutternhauptkörpers (20, 220) in der ersten Richtung vorgesehen ist, enthält,
die Schraubenwelle (1)
einen Schraubenwellen-Hauptkörper (10), der eine wellenförmige Gestalt aufweist und in dem die äußere Umfangslaufbahnfläche (12) vorgesehen ist, und
einen zweiten Befestigungsabschnitt (11), der an einem Ende in der zweiten Richtung des Schraubenwellen-Hauptkörpers (10) vorgesehen ist, enthält und
wobei die erste innere Umfangslaufbahnfläche (22A, 122A, 222A, 322A) und die zweite innere Umfangslaufbahnfläche (22C, 122D, 222E, 322C) größere Teilkreisdurchmesser aufweisen als die mittlere innere Umfangslaufbahnfläche (22B),
**dadurch gekennzeichnet, dass**
der erste Befestigungsabschnitt (21) ein Flansch ist, der von einer Außenumfangsfläche des Mutternhauptkörpers (20, 220) in radialer Richtung nach außen vorsteht.

2. Kugelumlaufspindelvorrichtung (100B) nach Anspruch 1, wobei
ein Abstand zwischen dem ersten Befestigungsabschnitt (21) und der ersten Schaltung (203A) in axialer Richtung ist kürzer als ein Abstand zwischen dem zweiten Befestigungsabschnitt (11) und der zweiten Schaltung (203E) in axialer Richtung, und
die erste innere Umfangslaufbahnfläche (22A, 122A, 222A, 322A) einen größeren Teilkreisdurchmesser aufweist als die zweite innere Umfangslaufbahnfläche (22C, 122D, 222E, 322C).

3. Kugelumlaufspindelvorrichtung (100C) nach Anspruch 1 oder Anspruch 2, wobei
die Teilkreisdurchmesser der Gewinde der ersten inneren Umfangslaufbahnfläche (22A, 122A, 222A, 322A) mit zunehmender Annäherung an die erste Richtung größer werden.

4. Kugelumlaufspindelvorrichtung (100C) nach einem der Ansprüche 1 bis 3, wobei
die Teilkreisdurchmesser der Gewinde der zweiten inneren Umfangslaufbahnfläche (22C, 122D, 222E, 322C) mit zunehmender Annäherung an die zweite Richtung größer werden.

5. Kugelumlaufspindelvorrichtung (100C) gemäß einem der Ansprüche 1 bis 4, wobei
die Steigungsdurchmesser der Gewinde der zentralen inneren Umfangslaufbahnfläche (22B) größer werden, je weiter sie sich in axialer Richtung von einem zentralen Abschnitt in axialer Richtung des Mutternhauptkörpers (20, 220) entfernen.

## Revendications

1. Dispositif formant vis à billes (100, 100A, 100B, 100C) comprenant :
une tige de vis (1) dont une extrémité est orientée dans une première direction et l'autre extrémité est orientée dans une deuxième direction, et sur une surface périphérique extérieure de laquelle est prévue une surface de trajet de roulement périphérique extérieure (12),
un écrou (2, 102, 202) sur une surface périphérique intérieure duquel est prévue une surface de trajet de roulement périphérique intérieure (22) et qui pénètre la tige de vis (1), et
une pluralité de billes agencées dans un trajet de roulement entre la surface de trajet de roulement périphérique extérieure (12) et la surface de trajet de roulement périphérique intérieure (22) ;
ledit écrou (2, 102, 202) présentant au moins trois composants de circulation,
ledit trajet de roulement présentant au moins trois circuits de billes correspondant respectivement aux composants de circulation,
lesdits au moins trois circuits de billes comprenant :
un circuit central (3B) situé dans une portion centrale de l'écrou (2, 102, 202) dans une direction axiale parallèle à l'axe central de la tige de vis (1),
un premier circuit (3A, 103A, 203A, 303A) situé dans une première direction par rapport au circuit central (3B), et
un deuxième circuit (3C, 103D, 203E, 303C) situé dans une deuxième direction par rapport au circuit central (3B),
les diamètres primaires des filets présents sur la surface de trajet de roulement périphérique extérieure (12) étant identiques,
sur la surface de trajet de roulement périphérique intérieure (22), une première surface de trajet de roulement périphérique intérieure (22A, 122A, 222A, 322A) appartenant au premier circuit (3A, 103A, 203A, 303A) et une deuxième surface de trajet de roulement périphérique intérieure (22C, 122D, 222E, 322C) appartenant au deuxième circuit (3C, 103D, 203E, 303C) présentant des diamètres primaires différents de celui d'une surface de trajet de roulement périphérique intérieure centrale (22B) appartenant au circuit central (3B) ;
ledit écrou (2, 102, 202) comprenant :
un corps principal d'écrou (20, 220) de forme cylindrique et dans lequel est prévue la surface de trajet de roulement périphérique intérieure (22), et
une première portion de fixation (21) prévue à une extrémité du corps principal d'écrou (20, 220) dans la première direction ;
la tige de vis (1) comprenant :
un corps principal de tige de vis (10) présentant une forme de tige et dans lequel est prévue la surface de trajet de roulement périphérique extérieure (12), et
une deuxième portion de fixation (11) prévue à une extrémité du corps principal de tige de vis (10) dans la deuxième direction,
la première surface de trajet de roulement périphérique intérieure (22A, 122A, 222A, 322A) et la deuxième surface de trajet de roulement périphérique intérieure (22C, 122D, 222E, 322C) présentant des diamètres primaires supérieurs à ceux de la surface de trajet de roulement périphérique intérieure centrale (22B) ;
**caractérisé en ce que**
la première portion de fixation (21) est une bride faisant saillie vers l'extérieur dans une direction radiale à partir d'une surface périphérique extérieure du corps principal d'écrou (20, 220).

2. Dispositif formant vis à billes (100B) selon la revendication 1, dans lequel
la distance entre la première portion de fixation (21) et le premier circuit (203A) dans la direction axiale est inférieure à la distance entre la deuxième portion de fixation (11) et le deuxième circuit (203E) dans la direction axiale, et
la première surface de trajet de roulement périphérique intérieure (22A, 122A, 222A, 322A) présente un diamètre primaire supérieur à celui de la deuxième surface de trajet de roulement périphérique intérieure (22C, 122D, 222E, 322C).

3. Dispositif formant vis à billes (100C) selon la revendication 1 ou la revendication 2, dans lequel
les diamètres primaires des filets de la première surface de trajet de roulement périphérique intérieure (22A, 122A, 222A, 322A) augmentent en se rapprochant de la première direction.

4. Dispositif formant vis à billes (100C) selon l'une quelconque des revendications 1 à 3, dans lequel
les diamètres primaires des filets de la deuxième surface de trajet de roulement périphérique intérieure (22C, 122D, 222E, 322C) augmentent en se rapprochant de la deuxième direction.

5. Dispositif formant vis à billes (100C) selon l'une quelconque des revendications 1 à 4, dans lequel
les diamètres primaires des filets de la surface de trajet de roulement périphérique intérieure centrale (22B) augmentent en s'éloignant, dans la direction axiale, d'une portion centrale - vue dans la direction axiale - du corps principal d'écrou (20, 220).
